# FASCICULE DE BREVET EUROPEEN

(11) **EP 3 531 615 B1**
(45) Date de publication et mention de la délivrance du brevet: **10.04.2024**
(21) Numéro de dépôt: 18157856.8
(22) Date de dépôt: 21.02.2018
(51) Int. Cl.: H04L 9/32

(54) **PROCEDE D'AUTHENTIFICATION D'UN TRANSPONDEUR EN COMMUNICATION AVEC UN SERVEUR**
AUTHENTIFIZIERUNGSVERFAHREN EINES TRANSPONDERS, DER MIT EINEM SERVER KOMMUNIZIERT
METHOD FOR AUTHENTICATING A TRANSPONDER COMMUNICATING WITH A SERVER

(43) Date de publication de la demande: 28.08.2019
(73) Titulaire: EM Microelectronic-Marin SA, 2074 Marin (CH)
(72) Inventeur: Novak, Tomas, 25065 Libeznice (CZ); Guilloux, Julian, 2013 Colombier (CH); Salgado, Stéphanie, 2520 La Neuveville (CH)
(74) Mandataire: ICB SA

(56) Documents cités:
- EP-A2- 2 817 937
- US-A1- 2007 250 923
- US-B1- 9 002 750

## Description

### DOMAINE TECHNIQUE

La présente invention concerne un procédé d'authentification d'un transpondeur en communication avec un serveur pour autoriser l'accès à un site déterminé.

### ARRIERE-PLAN TECHNOLOGIQUE

Avec le déploiement d'Internet des objets IdO (IoT en terminologie anglaise), il y a de plus en plus d'objets ou produits, qui sont équipés avec des transpondeurs de tout type de communication. Ces transpondeurs peuvent être par exemple du type à communication en champ proche NFC, voire aussi en UHF. Cela permet d'améliorer l'expérience de clients à la recherche d'un objet ou produit à acheter ou à consulter. De tels transpondeurs sont par exemple enfermés ou encapsulés dans des habits de sport, un équipement personnel ou tout autre instrument. L'utilisateur peut taper ou sélectionner le produit désiré pour avoir accès aux offres spéciales, telles que vidéo sur le réseau internet (web), rabais ou autre.

L'offre peut être généralement personnelle ou pas. Le fournisseur de services ou de l'offre doit être certain que le transpondeur est reconnu ou identifié pour l'accès au service en ligne. En d'autres mots, le fournisseur de services doit habituellement vérifier l'authenticité du transpondeur avant d'autoriser l'accès au site désiré.

Des protocoles cryptographiques d'interrogation-réponse sont des solutions bien connues pour authentifier un transpondeur avec son identifiant. Cependant cela requiert une communication bidirectionnelle, qui oblige habituellement le serveur d'initier la communication. Cependant dans le contexte d'objets intelligents, il est plus pratique ou convenable de laisser la maîtrise au consommateur ou utilisateur, et en le laissant initier la communication en alimentant le transpondeur avec un lecteur, tel qu'un téléphone portable à proximité par exemple. Cela implique que le lien est uniquement une liaison montante (up-link en terminologie anglaise). Cela signifie donc depuis le transpondeur vers le serveur uniquement.

Dans cette situation, les protocoles d'interrogation-réponse ne sont pas appropriés. Au lieu de ça, les mécanismes sont basés sur la génération d'un mot de passe unique (OTP, one-time password en terminologie anglaise). Cela permet une authentification du transpondeur avec un protocole à passage unique (one-pass protocol).

Dans le protocole de communication à mot de passe unique OTP, le transpondeur et le serveur peuvent partager une même clé secrète. Un mot d'authentification défini comme Nonce est un mot généré qui ne peut être utilisé qu'une seule fois en cryptographie. Il est au minimum composé d'un état d'un compteur et peut être associé à un identifiant du transpondeur. Selon un protocole de communication du type OTP, il est prévu les étapes suivantes :
- Le transpondeur et le serveur partagent une clé secrète K.
- Le transpondeur génère un mot défini Nonce et traite ce mot Nonce ensemble avec la clé K à travers un algorithme de cryptographie. Un algorithme typique utilisé pour cette application est généralement l'algorithme HOTP (Hash-based One-time Password en terminologie anglaise).
- Le transpondeur envoie le mot Nonce et le résultat de l'algorithme au serveur.
- Le serveur effectue la même opération et vérifie la consistance des données envoyées par le transpondeur. Le serveur doit aussi vérifier la consistance du mot Nonce.

Il est à noter que l'algorithme utilisé pour calculer le mot de passe unique OTP se base sur l'algorithme bien connu HOTP, qui lui-même se base sur l'algorithme HMAC. Cet algorithme HOTP est défini aussi sous la référence RFC 4226. On peut retrouver l'information de cet algorithme par exemple sous le site http://www.rfc-base.org/txt/rfc-4226.txt ou sous le site https://en.m.wikipedia.org/wiki/HMAC-based_One-time_Password_Algorithm.

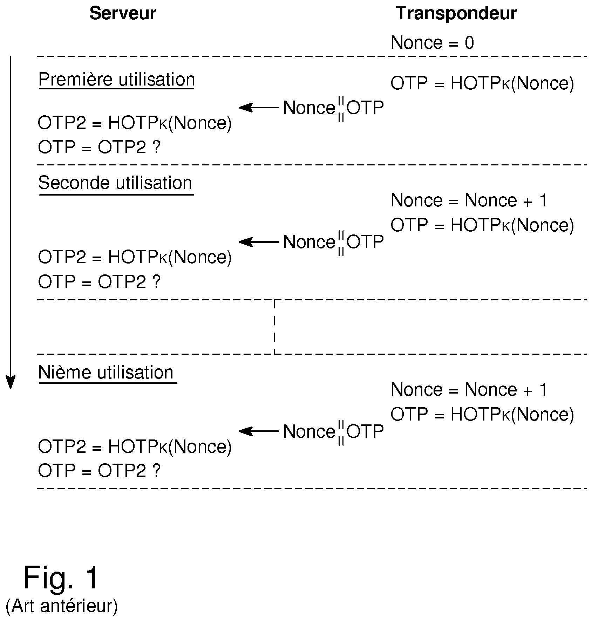

La figure 1 représente des étapes d'un procédé traditionnel d'authentification d'un transpondeur par un serveur pour l'autoriser à accéder à un site défini en relation à un produit ou objet sur lequel est disposé le transpondeur. La figure 1 reprend les différentes informations mentionnées ci-dessus.

Le mot Nonce, qui peut regrouper l'identifiant du transpondeur (UID) et l'état d'un compteur (CNT) du transpondeur, peut être initialement égal à 0 si l'identifiant n'est pas introduit dans le mot Nonce et le compteur débute à zéro. Bien entendu, il est aussi possible de débuter avec une valeur du compteur non nulle. Une fois que le transpondeur est en communication, le transpondeur calcule un mot de passe unique défini en figure 1 par OTP au moyen de l'algorithme HOTP et de la clé secrète K sur la base du mot Nonce. Pour la première utilisation, le résultat OTP du calcul par l'algorithme HOTP est transmis avec le mot Nonce comprenant l'état du compteur interne au serveur. Normalement la transmission au serveur passe par un dispositif d'interrogation ou de lecture, qui peut être mobile comme un téléphone portable. Ce téléphone portable se place à proximité du transpondeur pour une connexion par exemple NFC pour servir d'intermédiaire avec le serveur.

Le serveur reçoit du téléphone portable en communication avec le transpondeur, le mot Nonce et le résultat OTP, qui correspond au mot de passe unique (OTP). Le serveur va calculer également au moyen de l'algorithme HOTP le mot de passe unique OTP2 sur la base du mot Nonce reçu et avec la clé secrète K, qui doit être identique à celle du transpondeur pour le reconnaître. Ainsi on peut estimer que le serveur à confiance au transpondeur, si le mot de passe unique recalculé OTP2 est égal au mot de passe unique OTP reçu du transpondeur. Dans ces conditions, le transpondeur est bien authentifié. Dans le cas contraire, le transpondeur est prouvé comme non authentique et la communication ne continue pas.

Pour une seconde utilisation ou seconde lecture, le compteur du transpondeur est incrémenté d'une unité. Ainsi le précédent état du compteur Nonce devient Nonce + 1. Un nouveau calcul par l'algorithme HOTP avec la clé secrète K est effectué avec le nouveau mot Nonce pour donner le nouveau mot de passe unique OTP. Une transmission du mot Nonce et du résultat OTP est effectuée pour que le serveur reçoive ce nouveau mot Nonce différent du précédent mot Nonce et le nouveau mot de passe OTP. Le serveur va calculer à nouveau au moyen de l'algorithme HOTP, le nouveau mot de passe unique OTP2 sur la base du mot Nonce reçu et avec la clé secrète K, qui doit être identique à celle du transpondeur pour le reconnaître. Si le mot de passe unique recalculé OTP2 est égal au mot de passe unique OTP reçu du transpondeur, le transpondeur est bien authentifié et un accès à un site déterminé en liaison au produit du transpondeur est autorisé.

Plusieurs utilisations successives peuvent survenir avec à chaque fois un incrément d'une unité du compteur du transpondeur avant calcul par l'algorithme du mot de passe et transmission du résultat et de l'état du compteur. Une vérification des données du transpondeur est toujours effectuée dans le serveur pour l'autoriser à accéder à un site déterminé si authentifié.

On remarque que le compteur est à chaque fois incrémenté d'une unité à chaque lecture ou utilisation. Ce mot Nonce du transpondeur est un élément crucial, car il évite toute attaque par répétition (replay attack en terminologie anglaise). Dans le cas où le transpondeur génère deux fois la même valeur du mot Nonce pour deux lectures successives, il est possible de subir une telle attaque par espionnage et enregistrement des paires Nonce, OTP. Cela peut permettre de refaire ultérieurement cette séquence même en l'absence du transpondeur.

Pour ces raisons, le Nonce est typiquement une valeur de compteur avec un pas d'incrément de 1. Sans perte de généralité, on peut considérer que c'est une valeur incrémentale avec une valeur initiale égale à zéro. Avec un tel compteur, un serveur peut facilement identifier si la paire (Nonce, OTP) est une paire fraîche ou issue d'une attaque par répétition, en contrôlant que le nouveau Nonce est strictement plus grand que le dernier Nonce accepté.

Bien que le précédent protocole permette de vérifier l'authenticité d'un transpondeur et est aussi à l'épreuve des attaques par répétition, il y a quelques informations qu'un consommateur peut ne pas désirer divulguer. En particulier, il est facile de voir que le mot Nonce indique le nombre de fois que le transpondeur a été utilisé et lu. Cela indique combien de fois le service ou site a été accédé par le consommateur. En fonction de l'application, ces informations peuvent être sensibles et violer la vie privée du consommateur, ce qui constitue un inconvénient.

A ce titre, on peut citer le brevet US 8,750,514 B2, qui effectue les étapes du procédé susmentionné avec à chaque fois un incrément d'une unité du compteur du dispositif NFC pour le calcul du mot de passe unique avec l'état du compteur incrémenté d'une unité à chaque lecture ou utilisation, ce qui constitue un inconvénient.

La demande de brevet EP 2 817 937 A2 décrit un procédé et un système pour préserver la sécurité en synchronisant un mot Nonce lors d'une communication entre un transpondeur, placé dans un objet comme une montre, un soulier, un classeur, un badge, un vêtement ou autre, et un serveur. Un contrôle d'identification de l'objet est effectué dans le serveur par une interrogation effectuée par l'intermédiaire d'un transmetteur portable (PBR) à proximité du transpondeur. Un mot Nonce peut être établi et selon un temps défini d'un compteur, qui peut être incrémenté de 1 à chaque lecture dans le temps, mais sans l'aide d'un nombre aléatoire généré.

La demande EP2817651 A2 décrit un autre procédé et système pour préserver la sécurité en synchronisant un mot Nonce aléatoire lors d'une communication entre un transpondeur et un serveur où le Nonce est généré de façon identique au sein du transpondeur et du serveur.

Le brevet US 9,002,750 B1 décrit un procédé et un système pour générer un mot de passe unique (OTP) sur la base d'une valeur (PIN), qui se base sur l'apparition d'un événement ou le passage d'un temps. Ceci est utilisé pour l'authentification d'un utilisateur, mais le code PIN ne change pas à chaque lecture.

La demande de brevet US 2007/0250923 A1 décrit un procédé pour générer un mot de passe unique (OTP) pour une authentification particulière. La valeur d'un compteur peut être changé en fonction du temps. Le compteur C est modifié sur la base de l'apparition d'un événement et sur la base du passage d'un temps, qui définit une valeur TEC, mais pas de calcul d'un mot de passe unique (OTP) sur la base du mot Nonce.

### RESUME DE L'INVENTION

L'invention a donc pour but de pallier les inconvénients de l'état de la technique susmentionné en fournissant un procédé d'authentification d'un transpondeur en communication avec un serveur pour autoriser l'accès à un site déterminé, qui permet d'éviter toute attaque par répétition et en garantissant une protection du consommateur pour accéder au site déterminé en fonction du produit ou de l'objet à trouver.

A cet effet, l'invention concerne un procédé d'authentification d'un transpondeur en communication avec un serveur pour autoriser l'accès à un site déterminé, qui comprend les caractéristiques définies dans la revendication indépendante 1.

Des étapes particulières du procédé d'authentification d'un transpondeur sont définies dans les revendications dépendantes 2 à 8.

Un avantage du procédé d'authentification d'un transpondeur réside dans le fait que le compteur du transpondeur n'est pas incrémenté d'une seule unité à chaque lecture mais d'un nombre aléatoire non nul, nombre aléatoire, qui est un nombre entier allant de 1 à M. De préférence, M peut être une valeur égale à 8 ou une autre valeur. Ainsi, il n'y a plus de dépendance directe entre le nombre de lectures du transpondeur et le nombre de fois que le compteur a été incrémenté. Néanmoins, le serveur est toujours en mesure de vérifier, que le mot Nonce reçu du transpondeur est une nouvelle valeur strictement plus grande que la précédente valeur du mot Nonce d'une précédente utilisation ou lecture.

Avantageusement, plus la marge d'étapes possibles est grande (nombre d'utilisations), et plus la corrélation entre le Nonce et les utilisations est petite.

Avantageusement, la valeur initiale du compteur avant la première utilisation ou lecture peut être déterminée aléatoirement non nulle et plus grande que 0.

Grâce au procédé d'authentification du transpondeur, on arrive à dissocier le mot Nonce du nombre d'utilisations. Cela ne requiert pas de liaison descendante ou d'opérations additionnelles de cryptographie, telles qu'une forte dissimulation du mot Nonce par exemple en le cryptant.

### BREVE DESCRIPTION DES FIGURES

Les buts, avantages et caractéristiques du procédé d'authentification d'un transpondeur en communication avec un serveur apparaîtront mieux dans la description suivante sur la base d'au moins une forme d'exécution non limitative illustrée par les dessins sur lesquels :
- la figure 1 déjà citée représente les étapes d'un procédé d'authentification d'un transpondeur en communication avec un serveur de l'état de la technique,
- la figure 2 représente schématiquement les composants pour une communication entre un transpondeur monté sur un produit ou un objet et un serveur dédié_pour l'authentifier selon l'invention, et
- la figure 3 représente les étapes d'un procédé d'authentification d'un transpondeur en communication avec un serveur selon l'invention.

### DESCRIPTION DETAILLEE DE L'INVENTION

Dans la description suivante, tous les composants utilisés pour le procédé d'authentification d'un transpondeur en communication avec un serveur selon l'invention, qui sont bien connus de l'homme du métier dans ce domaine technique ne seront relatés que de manière simplifiée.

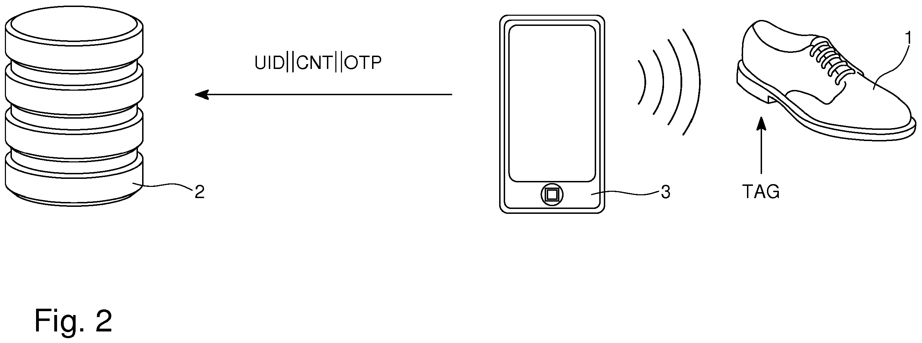

La figure 2 représente schématiquement les différents éléments d'un système d'authentification d'un transpondeur pour une communication avec un serveur 2. Le système comprend au moins un transpondeur TAG disposé sur un objet ou un produit 1, tel qu'un habit sportif ou une chaussure dans le cas présent ou tout autre produit ou instrument de la vie courante. Généralement, le transpondeur TAG, qui comprend des moyens de liaison sans fil pour établir une communication avec le serveur 2, peut être réveillé ou activé par un dispositif de lecture 3 par exemple à proximité pour une liaison NFC. Ce dispositif de lecture peut être une unité mobile de communication comme un téléphone portable ou tablette portable 3. Ce téléphone ou tablette portable 3 peut établir une communication avec un serveur 2 afin de débuter le procédé d'authentification d'un transpondeur TAG pour lui permettre une fois authentifié d'avoir accès à un site déterminé par l'intermédiaire du serveur 2. Le site déterminé est relatif au produit 1 sur lequel est disposé le transpondeur TAG.

A l'approche de l'unité de communication mobile 3, telle qu'un téléphone portable 3 à la figure 2, du transpondeur TAG, ce dernier peut être alimenté en redressant le signal d'interrogation capté du téléphone. Une fois réveillé, le transpondeur peut effectuer les opérations de calcul d'un mot de passe unique (OTP) sur la base d'un état d'un compteur interne (CNT) et éventuellement d'un identifiant (UID) du produit ou objet 1. Dans une unité de traitement non représentée, telle qu'une unité logique ou un microprocesseur, qui est cadencé par un oscillateur intégré, un calcul du mot de passe unique peut être effectué au moyen d'un algorithme défini HOTP, qui est mémorisé dans une unité mémoire liée à l'unité de traitement.

Le transpondeur TAG transmet dans une communication à sens unique, un signal d'information comprenant au moins l'état du compteur CNT, qui est une valeur du mot Nonce, et le mot de passe unique OTP calculé par l'algorithme HOTP au moyen d'au moins l'état du compteur à l'aide de la clé secrète K, qui est partagée par le serveur 2. De préférence, le mot de passe unique OTP peut être calculé sur la base de l'état du compteur CNT et de l'identifiant UID du produit ou objet sur lequel est disposé le transpondeur TAG. Le signal d'information comprendra donc l'état du compteur CNT, l'identifiant UID et le mot de passe unique OTP.

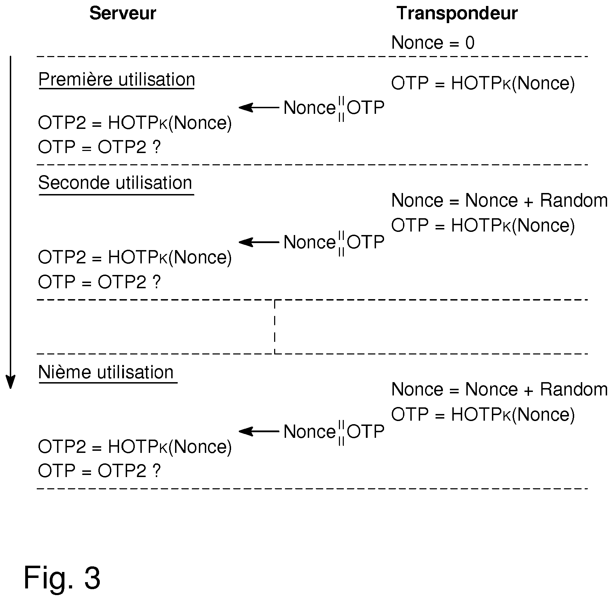

Pour mieux comprendre le procédé d'authentification d'un transpondeur en communication avec un serveur pour son authentification, on se réfère maintenant à la figure 3.

La figure 1 représente des étapes d'un procédé traditionnel d'authentification d'un transpondeur par un serveur pour l'autoriser à accéder à un site défini en relation à un produit ou objet sur lequel est disposé le transpondeur. La figure 3 reprend les différentes informations mentionnées ci-dessus.

Sur cette figure 3, la valeur du mot Nonce, comme indiqué en référence à la figure 1 de l'état de la technique, peut regrouper l'identifiant du transpondeur (UID) et l'état d'un compteur (CNT) du transpondeur. Cette première valeur du mot Nonce peut être initialement égale à 0 si l'identifiant UID n'est pas introduit dans le mot Nonce et avec le compteur débutant à zéro. Cependant cette valeur du mot Nonce peut aussi être au début d'une valeur initiale supérieure à 0 et obtenue sur la base d'un nombre aléatoire généré dans le transpondeur. Lors de la transmission de la valeur du mot Nonce et si l'identifiant UID est aussi transmis, l'information de l'identifiant peut se trouver dans les bits de poids forts MSbits du mot Nonce, alors que l'état du compteur peut être dans les bits de poids faibles LSbits.

Une fois interrogé ou en communication, le transpondeur calcule un mot de passe unique défini en figure 3 par OTP au moyen de l'algorithme HOTP et de la clé secrète K sur la base de la valeur du mot Nonce. Pour la première utilisation, le résultat OTP du calcul par l'algorithme HOTP est transmis au serveur avec la valeur du mot Nonce comprenant l'état du compteur interne et éventuellement l'identifiant du transpondeur. Par exemple la transmission au serveur peut passer par un dispositif d'interrogation ou de lecture, qui peut être mobile comme un téléphone portable ou une tablette informatique. Ce téléphone portable se place à proximité du transpondeur pour une connexion NFC et pour servir d'intermédiaire avec le serveur.

Le serveur reçoit du téléphone portable en communication avec le transpondeur, le mot Nonce et le résultat OTP, qui est le mot de passe unique (OTP). Le serveur va calculer également au moyen de l'algorithme HOTP le mot de passe unique OTP2 sur la base du mot Nonce reçu et avec la clé secrète K, qui doit être identique à celle du transpondeur pour le reconnaître. Ainsi on peut estimer que le serveur à confiance au transpondeur, si le mot de passe unique recalculé OTP2 est égal au mot de passe unique OTP reçu du transpondeur. Dans ces conditions, le transpondeur est bien authentifié, car il a bien été vérifié aussi la connaissance de la clé secrète entre les deux entités. Dans le cas contraire, le transpondeur est prouvé comme non authentique et la communication ne continue pas.

Pour une seconde utilisation ou seconde lecture, le compteur du transpondeur est incrémenté d'un nombre aléatoire (Random). Ainsi le précédent état du compteur Nonce devient Nonce + Random. Un nouveau calcul par l'algorithme HOTP avec la clé secrète K est effectué avec le nouveau mot Nonce pour donner le nouveau mot de passe unique OTP. Une transmission du mot Nonce et du résultat OTP est effectuée pour que le serveur reçoive ce nouveau mot Nonce différent du précédent mot Nonce et le nouveau mot de passe OTP lors de la seconde utilisation ou lecture.

Le serveur va calculer à nouveau au moyen de l'algorithme HOTP, le nouveau mot de passe unique OTP2 sur la base du mot Nonce reçu et avec la clé secrète K, qui doit être identique à celle du transpondeur pour le reconnaître. Si le mot de passe unique recalculé OTP2 est égal au mot de passe unique OTP reçu du transpondeur, et si la valeur du mot Nonce est supérieure à la dernière valeur du mot Nonce valide, le transpondeur est bien authentifié et un accès à un site déterminé en liaison au produit du transpondeur est autorisé lors de cette seconde utilisation ou lecture.

Ces opérations peuvent se répéter N fois pour N utilisations ou lectures. A chaque lecture du transpondeur le mot d'authentification Nonce précédent est incrémenté d'un autre nombre aléatoire (RANDOM) généré dans l'unité de traitement du transpondeur avant le calcul du mot de passe unique à transmettre.

Le nombre aléatoire RANDOM généré et ajouté au précédent mot d'authentification Nonce pour chaque nouvelle lecture se situe entre 1 et M, qui est un nombre entier supérieur à 1. Le nombre M peut être égal par exemple à 8, mais peut prendre une autre valeur selon une programmation à effectuer dans le transpondeur. Comme il ne s'agit pas d'un incrément d'une seule unité du mot Nonce à chaque lecture, ce mot Nonce est décorrélé du nombre de lectures, ce qui garantit une sécurité à l'utilisateur.

A titre d'exemple non limitatif, le second mot Nonce pour une seconde lecture peut valoir Nonce + 6, où 6 est le nombre aléatoire généré dans le transpondeur. Si le premier mot Nonce est à 0, cela donne 6 pour le second mot Nonce. Pour une troisième lecture, le troisième mot Nonce peut valoir Nonce + 5, ce qui donne 11 pour le troisième mot Nonce à transmettre, avec le mot de passe unique OTP calculé avec le mot Nonce et avec la clé secrète. L'ajout d'un autre nombre aléatoire au précédent mot Nonce est effectué à chaque nouvelle lecture jusqu'à la Nième lecture et ainsi de suite.

A la réception de chaque mot Nonce et du mot de passe unique OTP, le serveur vérifiera que le mot Nonce est toujours supérieur au précédent mot Nonce reçu lors d'une précédente lecture.

La privatisation de l'utilisateur est un point clé pour croître sur le marché IdO. Ainsi avec une étape fixée du compteur générant notamment le mot Nonce, n'importe qui peut savoir combien de fois et fréquemment une lecture par le serveur sur un site du produit est effectuée.

Il est aussi à noter que le compteur avec chaque ajout d'un nombre aléatoire à chaque nouvelle lecture, peut se retrouver au nombre maximal possible de comptage et repasser par la valeur 0, ce qui peut poser un problème. Dans ces conditions, il peut être envisagé de fixer une valeur initiale du compteur pour définir le mot Nonce. Cette valeur initiale peut être générée avec un premier nombre aléatoire défini entre 1 et N. Le nombre N est choisi de telle manière à être de plusieurs ordres de grandeur inférieur au nombre maximal de comptage du compteur.

Pour établir la communication entre le transpondeur et le serveur, le serveur a besoin de connaître la valeur initiale du compteur. Cela peut être résolu au moins de deux manières :
- la valeur initiale est une fonction déterministe de l'identité du transpondeur, ou
- la valeur initiale est communiquée à la première communication entre le transpondeur et le serveur.

Comme indiqué ci-dessus, il peut y avoir un risque de débordement ou surcharge du mot Nonce, ainsi que le mot Nonce revient à une valeur à zéro. Dans cette situation, le serveur rejettera systématiquement le transpondeur étant donné que le mot Nonce apparaîtra plus petit que n'importe quelle valeur.

Pour résoudre ce problème, il peut être prévu que la taille en bits du mot Nonce est telle que le débordement requiert un grand nombre d'utilisations du transpondeur et la valeur initiale du mot Nonce MSbits peut être forcée à 0. Dans un exemple non limitatif, on peut prendre un transpondeur, qui ne doit pas être utilisé plus de 10000 fois. Une fois qu'on peut encoder le mot Nonce sur 4 octets, il faut établir le mot Nonce initial à une valeur entre 0 et 0xFFFF, et établir un pas entre 1 et 0xFFFF, ce qui correspond entre 1 et M pour la valeur aléatoire déterminée. Le mot Nonce peut seulement atteindre la valeur 0x2710D8EF, même après 10000 usages, avec la situation invraisemblable de faire des pas chaque fois avec 0xFFFF. Ainsi un surdimensionnement du mot Nonce permet d'éviter un débordement prématuré du mot Nonce à la valeur maximale possible.

Il est à noter que ce risque de débordement existe aussi avec un incrément de 1 du compteur à chaque utilisation, mais c'est géré de manière triviale, juste en vérifiant que le compteur n'a pas atteint la valeur maximale. Dans le cas d'un pas aléatoire (RANDOM) ajouté à chaque lecture au mot Nonce, on doit être plus prudent pour ne pas avoir un risque de franchir la valeur maximale du compteur. On peut fixer qu'à chaque lecture, le mot Nonce est incrémenté d'un nombre aléatoire RANDOM entre 1 et M, où M peut être défini par exemple à 8, mais peut aussi être défini à une autre valeur, telle que 16, 32, 64 en fonction de la taille de comptage du compteur. On peut admettre que la taille de comptage du compteur est P fois supérieur à l'incrément aléatoire M à chaque lecture. Le nombre P, qui est un nombre entier, peut être au moins égal à 256 (FF) de préférence, voire d'au moins 4096 (FFF) ou 65536 (FFFF) fois supérieur au nombre M.

Comme décrit ci-devant, la présente invention permet de dissocier le mot Nonce du nombre d'utilisations ou de lectures, et sa mise en pratique est facile. De plus, cela ne requiert pas de liaison descendante ou d'opérations additionnelles de cryptographie pour dissimuler le mot Nonce lors de la transmission du transpondeur au serveur.

On peut aussi envisager de définir un mot Nonce dans l'unité de traitement du transpondeur en communication, sur la base d'un précédent état du compteur du transpondeur, qui est décrémenté d'un nombre aléatoire généré dans l'unité de traitement. Dans ce cas de figure, il peut être prévu d'initialiser le mot Nonce de l'état du compteur à sa valeur maximale par exemple et d'effectuer à chaque lecture un décrément d'un nombre aléatoire déterminé dans l'unité de traitement. Le serveur va donc contrôler qu'à chaque réception de l'information du mot Nonce et de l'OTP, il y a bien un décrément du mot Nonce par rapport à une précédente valeur du mot Nonce reçue.

Il est encore à noter qu'en lieu et place d'une unité de communication mobile, tel qu'un téléphone ou une tablette 3, il peut être envisagé d'utiliser une unité de communication à distance pour une communication par signaux UHF avec le transpondeur. Cette unité de communication UHF peut être un portail d'entrée à une installation de ski, une station de péage autoroutier ou divers autres instruments, reliés à un serveur de manière filaire ou sans fil.

A partir de la description qui vient d'être faite, plusieurs variantes du procédé d'authentification d'un transpondeur en communication avec un serveur selon l'invention peuvent être conçues par l'homme du métier sans sortir du cadre de l'invention définie par les revendications. Le transpondeur peut être du type passif, voire du type actif avec sa propre source d'énergie, qui peut être une batterie, ou une cellule solaire ou un générateur thermoélectrique.

## Revendications

1. Procédé d'authentification d'un transpondeur (TAG) en communication avec un serveur (2), le transpondeur comprenant une unité de traitement reliée à une unité mémoire, à un compteur et à des moyens de liaison sans fil pour établir une communication avec le serveur (2), **caractérisé en ce que** le procédé comprend les étapes de :
- incrémenter la valeur du compteur du transpondeur (TAG) d' un nouveau nombre aléatoire généré dans l'unité de traitement, l'incrémentation résultant en une nouvelle valeur du compteur du transpondeur,
- définir un mot Nonce dans l'unité de traitement du transpondeur lors d'une opération de communication, où le Nonce consiste en la nouvelle valeur de compteur du transpondeur,
- calculer un premier mot de passe unique (OTP) dans l'unité de traitement du transpondeur (TAG) à l'aide d'un algorithme dédié, ledit algorithme étant mémorisé, et d'une clé secrète sur la base du mot Nonce généré dans l'unité de traitement,
- transmettre le mot Nonce et le premier mot de passe unique (OTP) au serveur (2), en vérifiant, que le mot Nonce reçu du transpondeur est une nouvelle valeur strictement plus grande que la précédente valeur du mot Nonce d'une précédente utilisation ou lecture,
- calculer un second mot de passe unique (OTP2) dans le serveur (2) sur la base de la clé secrète et du mot Nonce reçu du transpondeur (TAG) au moyen d'un même algorithme dédié identique à celui du transpondeur (TAG),
- contrôler si le second mot de passe unique (OTP2) calculé est identique au premier mot de passe unique (OTP) reçu du transpondeur pour authentifier le transpondeur et autoriser l'accès à un site déterminé par le serveur en ayant vérifié la connaissance de la clé secrète utilisée pour calculer les premier et second mots de passe dans le transpondeur (TAG) et le serveur (2),
**en ce qu'**à chaque lecture du transpondeur, l'état du compteur pour générer le mot d'authentification Nonce est incrémenté d'un nombre aléatoire compris entre 1 et M, où M est un nombre entier, et
**en ce que** la taille de comptage du compteur du transpondeur est P fois supérieur à l'incrément aléatoire M, ce nombre P, qui est un nombre entier, étant au moins égal à 256 fois supérieur au nombre M.

2. Procédé d'authentification d'un transpondeur (TAG) selon la revendication 1, **caractérisé en ce qu'**avant une première lecture du transpondeur (TAG), le mot Nonce est initialisé à une première valeur, qui peut être définie à zéro ou selon une valeur déterminée aléatoirement dans l'unité de traitement du transpondeur (TAG) et définie entre 1 et N.

3. Procédé d'authentification d'un transpondeur (TAG) selon la revendication 1, **caractérisé en ce que** le mot Nonce défini dans l'unité de traitement du transpondeur pour une communication avec le serveur (2), comprend en plus de l'état du compteur incrémenté d'un nombre aléatoire, un identifiant (UID) du transpondeur en fonction du produit (1) ou de l'objet sur lequel il est placé.

4. Procédé d'authentification d'un transpondeur (TAG) selon la revendication 1, **caractérisé en ce que** la communication entre le transpondeur (TAG) et le serveur (2) passe par l'intermédiaire d'une unité de communication mobile (3), en liaison en champ proche avec le transpondeur (TAG).

5. Procédé d'authentification d'un transpondeur (TAG) selon la revendication 1, **caractérisé en ce que** la communication entre le transpondeur (TAG) et le serveur (2) passe par l'intermédiaire d'une unité de communication (3) en liaison UHF avec le transpondeur (TAG).

6. Procédé d'authentification d'un transpondeur (TAG) selon la revendication 1, **caractérisé en ce que** le calcul de chaque mot de passe unique est obtenu au moyen d'un algorithme de cryptographie HOTP.

7. Procédé d'authentification d'un transpondeur (TAG) en communication avec un serveur (2), le transpondeur comprenant une unité de traitement reliée à une unité mémoire, à un compteur et à des moyens de liaison sans fil pour établir une communication avec le serveur (2), **caractérisé en ce que** le procédé comprend les étapes de :
- décrémenter la valeur du compteur du transpondeur (TAG) d' un nouveau nombre aléatoire généré dans l'unité de traitement, la décrémentation résultant en une nouvelle valeur du compteur du transpondeur,
- définir un mot Nonce dans l'unité de traitement du transpondeur lors d'une opération de communication, où le Nonce consiste en la nouvelle valeur de compteur du transpondeur,
- calculer un premier mot de passe unique (OTP) dans l'unité de traitement du transpondeur (TAG) à l'aide d'un algorithme dédié, ledit algorithme étant mémorisé, et d'une clé secrète sur la base du mot Nonce généré dans l'unité de traitement,
- transmettre le mot Nonce et le premier mot de passe unique (OTP) au serveur (2), en contrôlant qu'à chaque réception de l'information du mot Nonce et de l'OTP, il y a bien un décrément du mot Nonce par rapport à une précédente valeur du mot Nonce reçue,
- calculer un second mot de passe unique (OTP2) dans le serveur (2) sur la base de la clé secrète et du mot Nonce reçu du transpondeur (TAG) au moyen d'un même algorithme dédié identique à celui du transpondeur (TAG), et
- contrôler si le second mot de passe unique (OTP2) calculé est identique au mot de passe unique (OTP) reçu du transpondeur pour authentifier le transpondeur et autoriser l'accès à un site déterminé par le serveur en ayant vérifié la connaissance de la clé secrète utilisée pour calculer les premier et second mots de passe dans le transpondeur (TAG) et le serveur (2).

## Patentansprüche

1. Verfahren zur Authentifizierung eines Transponders (TAG), der mit einem Server (2) in Kommunikation steht, wobei der Transponder eine Verarbeitungseinheit umfasst, die mit einer Speichereinheit, einem Zähler und Drahtlosverbindungsmitteln verbunden ist, um eine Kommunikation mit dem Server (2) aufzubauen, **dadurch gekennzeichnet, dass** das Verfahren die folgenden Schritte umfasst:
- Inkrementieren des Werts des Zählers des Transponders (TAG) um eine neue, in der Verarbeitungseinheit generierte Zufallszahl, wobei die Inkrementierung zu einem neuen Wert des Zählers des Transponders führt,
- Definieren eines Nonce-Worts in der Verarbeitungseinheit des Transponders bei einem Kommunikationsvorgang, wobei die Nonce im neuen Zählerwert des Transponders besteht,
- Berechnen eines ersten Einmalpassworts (OTP) in der Verarbeitungseinheit des Transponders (TAG) mithilfe eines dedizierten Algorithmus, wobei der Algorithmus gespeichert wird, und eines geheimen Schlüssels auf Grundlage des in der Verarbeitungseinheit generierten Nonce-Worts,
- Übertragen des Nonce-Worts und des ersten Einmalpassworts (OTP) an den Server (2) unter Verifizieren, dass das vom Transponder empfangene Nonce-Wort ein neuer Wert ist, der strikt größer ist als der vorherige Wert des Nonce-Worts einer vorherigen Verwendung oder eines vorherigen Auslesens,
- Berechnen eines zweiten Einmalpassworts (OTP2) im Server (2) auf Grundlage des geheimen Schlüssels und des vom Transponder (TAG) empfangenen Nonce-Worts mittels desselben dedizierten Algorithmus, der mit dem des Transponders (TAG) identisch ist,
- Überprüfen, ob das berechnete zweite Einmalpasswort (OTP2) mit dem vom Transponder empfangenen ersten Einmalpasswort (OTP) identisch ist, um den Transponder zu authentifizieren und den Zugang zu einem bestimmten Ort durch den Server zu autorisieren, nachdem die Kenntnis des zur Berechnung des ersten und des zweiten Passworts im Transponder (TAG) und dem Server (2) verwendeten geheimen Schlüssels verifiziert wurde,
dadurch, dass bei jedem Auslesen des Transponders der Stand des Zählers zum Generieren des Nonce-Authentifizierungsworts um eine Zufallszahl zwischen 1 und M inkrementiert wird, wobei M eine ganze Zahl ist, und dadurch, dass die Zählgröße des Zählers des Transponders P-mal größer ist als das Zufallsinkrement M, wobei diese Zahl P, die eine ganze Zahl ist, mindestens gleich 256-mal größer ist als die Zahl M.

2. Verfahren zur Authentifizierung eines Transponders (TAG) nach Anspruch 1, **dadurch gekennzeichnet, dass** vor einem ersten Auslesen des Transponders (TAG) das Nonce-Wort mit einem ersten Wert, der mit Null definiert sein kann, oder gemäß einem in der Verarbeitungseinheit des Transponders (TAG) zufällig bestimmten und zwischen 1 und N definierten Wert initialisiert wird.

3. Verfahren zur Authentifizierung eines Transponders (TAG) nach Anspruch 1, **dadurch gekennzeichnet, dass** das in der Verarbeitungseinheit des Transponders definierte Nonce-Wort für eine Kommunikation mit dem Server (2) zusätzlich zu dem um eine Zufallszahl inkrementierten Stand des Zählers eine Kennung (UID) des Transponders in Abhängigkeit von dem Produkt (1) oder dem Objekt, an dem er angebracht ist, umfasst.

4. Verfahren zur Authentifizierung eines Transponders (TAG) nach Anspruch 1, **dadurch gekennzeichnet, dass** die Kommunikation zwischen dem Transponder (TAG) und dem Server (2) über eine mobile Kommunikationseinheit (3) läuft, die mit dem Transponder (TAG) in Nahfeldverbindung steht.

5. Verfahren zur Authentifizierung eines Transponders (TAG) nach Anspruch 1, **dadurch gekennzeichnet, dass** die Kommunikation zwischen dem Transponder (TAG) und dem Server (2) über eine Kommunikationseinheit (3) läuft, die mit dem Transponder (TAG) in UHF-Verbindung steht.

6. Verfahren zur Authentifizierung eines Transponders (TAG) nach Anspruch 1, **dadurch gekennzeichnet, dass** die Berechnung jedes Einmalpassworts mittels eines HOTP-Kryptografie-Algorithmus erhalten wird.

7. Verfahren zur Authentifizierung eines Transponders (TAG), der mit einem Server (2) in Kommunikation steht, wobei der Transponder eine Verarbeitungseinheit umfasst, die mit einer Speichereinheit, einem Zähler und Drahtlosverbindungsmitteln verbunden ist, um eine Kommunikation mit dem Server (2) aufzubauen, **dadurch gekennzeichnet, dass** das Verfahren die folgenden Schritte umfasst:
- Dekrementieren des Werts des Zählers des Transponders (TAG) um eine neue, in der Verarbeitungseinheit generierte Zufallszahl, wobei die Dekrementierung zu einem neuen Wert des Zählers des Transponders führt,
- Definieren eines Nonce-Worts in der Verarbeitungseinheit des Transponders bei einem Kommunikationsvorgang, wobei die Nonce im neuen Zählerwert des Transponders besteht,
- Berechnen eines ersten Einmalpassworts (OTP) in der Verarbeitungseinheit des Transponders (TAG) mithilfe eines dedizierten Algorithmus, wobei der Algorithmus gespeichert wird, und eines geheimen Schlüssels auf Grundlage des in der Verarbeitungseinheit generierten Nonce-Worts,
- Übertragen des Nonce-Worts und des ersten Einmalpassworts (OTP) an den Server (2) unter Überprüfen, dass bei jedem Empfang der Informationen des Nonce-Worts und des OTP eine Dekrementierung des Nonce-Worts in Bezug auf einen empfangenen vorherigen Wert des Nonce-Worts vorliegt,
- Berechnen eines zweiten Einmalpassworts (OTP2) im Server (2) auf Grundlage des geheimen Schlüssels und des vom Transponder (TAG) empfangenen Nonce-Worts mittels desselben dedizierten Algorithmus, der mit dem des Transponders (TAG) identisch ist, und
- Überprüfen, ob das berechnete zweite Einmalpasswort (OTP2) mit dem vom Transponder empfangenen Einmalpasswort (OTP) identisch ist, um den Transponder zu authentifizieren und den Zugang zu einem bestimmten Ort durch den Server zu autorisieren, nachdem die Kenntnis des zur Berechnung des ersten und des zweiten Passworts im Transponder (TAG) und dem Server (2) verwendeten geheimen Schlüssels verifiziert wurde.

## Claims

1. Method of authenticating a transponder (TAG) in communication with a server (2), the transponder comprising a processing unit linked to a memory unit, to a counter and to wireless linking means so as to establish a communication with the server (2), **characterised in that** the method comprises the steps of:
- incrementing the counter value of the transponder (TAG) by a new random number generated in the processing unit, the incrementation resulting in a new value of the transponder counter,
- defining a Nonce word in the processing unit of the transponder during a communication operation, where the Nonce consists of the new counter value of the transponder,
- calculating a first one-time password (OTP) in the processing unit of the transponder (TAG) with the aid of a dedicated algorithm, the said algorithm being stored, and of a secret key on the basis of the Nonce word generated in the processing unit,
- transmitting the Nonce word and the first one-time password (OTP) to the server (2), by checking, that the Nonce word received from the transponder is a new value strictly greater than the previous value of the Nonce word from a previous use or reading,
- calculating a second one-time password (OTP2) in the server (2) on the basis of the secret key and the Nonce word received from the transponder (TAG) by means of one and the same dedicated algorithm identical to that of the transponder (TAG),
- checking whether the second one-time password (OTP2) calculated is identical to the first one-time password (OTP) received from the transponder so as to authenticate the transponder and authorise access to a site determined by the server by having verified knowledge of the secret key used to calculate the first and second passwords in the transponder (TAG) and the server (2),
**in that** at each reading of the transponder, the state of the counter for generating the Nonce authentication word is incremented by a random number lying between 1 and M, where M is an integer number, and
**in that** the count size of the counter of the transponder is P times greater than the random increment M, this number P, which is an integer number, being at least equal to 256 times greater than the number M.

2. Method of authenticating a transponder (TAG) according to claim 1, **characterised in that** before a first reading of the transponder (TAG), the Nonce word is initialised to a first value, which can be defined at zero or according to a value randomly determined in the processing unit of the transponder (TAG) and defined between 1 and N.

3. Method of authenticating a transponder (TAG) according to claim 1, **characterised in that** the Nonce word defined in the processing unit of the transponder for a communication with the server (2) comprises, in addition to the state of the counter incremented by a random number, an identifier (UID) of the transponder as a function of the product (1) or of the thing on which it is placed.

4. Method of authenticating a transponder (TAG) according to claim 1, **characterised in that** the communication between the transponder (TAG) and the server (2) passes by way of a mobile communication unit (3), in near-field link with the transponder (TAG).

5. Method of authenticating a transponder (TAG) according to claim 1, **characterised in that** the communication between the transponder (TAG) and the server (2) passes by way of a mobile communication unit (3), in UHF link with the transponder (TAG).

6. Method of authenticating a transponder (TAG) according to claim 1, **characterised in that** the calculation of each one-time password is obtained by means of an HOTP cryptography algorithm.

7. Method of authenticating a transponder (TAG) in communication with a server (2), the transponder comprising a processing unit linked to a memory unit, to a counter and to wireless linking means so as to establish a communication with the server (2), **characterised in that** the method comprises the steps of:
- decrementing the counter value of the transponder (TAG) by a new random number generated in the processing unit, the decrementation resulting in a new value of the transponder counter,
- defining a Nonce word in the processing unit of the transponder during a communication operation, where the Nonce consists of the new counter value of the transponder,
- calculating a first one-time password (OTP) in the processing unit of the transponder (TAG) with the aid of a dedicated algorithm, the said algorithm being stored, and of a secret key on the basis of the Nonce word generated in the processing unit,
- transmitting the Nonce word and the first one-time password (OTP) to the server (2), by checking that each time the information of the Nonce word and the OTP is received, there is a decrement of the Nonce word compared to a previous value of the Nonce word received,
- calculating a second one-time password (OTP2) in the server (2) on the basis of the secret key and the Nonce word received from the transponder (TAG) by means of one and the same dedicated algorithm identical to that of the transponder (TAG), and
- checking whether the second one-time password (OTP2) calculated is identical to the one-time password (OTP) received from the transponder so as to authenticate the transponder and authorise access to a site determined by the server by having verified knowledge of the secret key used to calculate the first and second passwords in the transponder (TAG) and the server (2).
